# EUROPÄISCHE PATENTSCHRIFT

(11) **EP 4 121 876 B1**
(45) Veröffentlichungstag und Bekanntmachung des Hinweises auf die Patenterteilung: **08.05.2024**
(21) Anmeldenummer: 21708145.4
(22) Anmeldetag: 16.02.2021
(51) Int. Cl.: G06F 21/44, H04L 9/40

(54) **VERFAHREN UND ANORDNUNG ZUM AUSTAUSCHEN EINES DOMAIN-REGISTRARS FÜR DAS AUTHENTIFIZIEREN UND KONFIGURIEREN VON DIGITALEN ZERTIFIKATEN**
METHOD AND ARRANGEMENT FOR EXCHANGING A DOMAIN REGISTRAR FOR AUTHENTICATING AND CONFIGURING DIGITAL CERTIFICATES
PROCÉDÉ ET AGENCEMENT SERVANT À ÉCHANGER UN REGISTRAIRE DE DOMAINE POUR AUTHENTIFIER ET CONFIGURER DES CERTIFICATS NUMÉRIQUES

(30) Priorität: 17.03.2020 DE 102020203364
(43) Veröffentlichungstag der Anmeldung: 25.01.2023
(73) Patentinhaber: Siemens Schweiz AG, 8047 Zürich (CH)
(72) Erfinder: CAMENZIND, Oskar, 6422 Steinen (CH)
(74) Vertreter: Siemens Patent Attorneys
(86) Internationale Anmeldenummer: PCT/EP2021/053792
(87) Internationale Veröffentlichungsnummer: WO 2021/185520

(56) Entgegenhaltungen:
- EP-A1- 3 534 588
- WO-A1-2019/033116
- LIN HUICHEN ET AL: "SAGA: Secure Auto-Configurable Gateway Architecture for Smart Home", 2019 IEEE 24TH PACIFIC RIM INTERNATIONAL SYMPOSIUM ON DEPENDABLE COMPUTING (PRDC), IEEE, 1. Dezember 2019 (2019-12-01), Seiten 11-1109, XP033687607, DOI: 10.1109/PRDC47002.2019.00013 [gefunden am 2020-01-07]

## Beschreibung

Die Erfindung betrifft ein Verfahren und eine Anordnung zum Austauschen eines Vorgänger-Domain-Registrars für das Authentifizieren und Konfigurieren von digitalen Zertifikaten von IoT-Geräten durch einen neuen Domain-Registrar.

Unter dem Internet der Dinge (Internet-of-things, IoT) versteht man Informations- und Kommunikationstechnologien, um physische und/oder virtuelle Geräte über das Internet oder über Internet-ähnliche Strukturen zu verknüpfen.

IoT-Geräte für das Internet der Dinge (Internet of Things, IoT) sind Geräte oder Komponenten eines Systems, die drahtgebunden oder drahtlos an ein Netzwerk (z.B. Internet, Intranet) anschliessbar sind, und eingerichtet sind, Daten zu erfassen, zu verarbeiten, zu speichern, oder zu übertragen.

IoT-Geräte spielen eine immer wichtigere Rolle in verschiedensten Bereichen (z.B. Fahrzeuge, Fabriken, Büro- und Wohngebäude). Die steigende Anzahl von IoT-Geräten weist nicht nur auf die Relevanz dieser Geräte hin, sondern fordert auch ein gewisses Mass an Sicherheit, insbesondere Manipulationssicherheit. Bei der Inbetriebnahme bzw. Installation von IoT-Geräten in Netzwerken, müssen diese Geräte zuerst überprüft werden, um den Einbau von korrumpierten (z.B. mit Schadsoftware versehenen Geräten) zu verhindern. Dies ist ein manueller Vorgang und kann bei der steigenden Anzahl von IoT-Geräten ein zeitintensives und teures Verfahren sein. WO 2019/033116 ist Teil des Standes der Technik

Es ist daher die Aufgabe der vorliegenden Erfindung, ein effektives Verfahren für die Inbetriebnahme vertrauenswürdiger IoT-Geräte bereitzustellen.

Die Aufgabe wird gelöst durch ein Verfahren zum Austauschen eines Vorgänger-Domain-Registrars für das Authentifizieren und Konfigurieren von digitalen Zertifikaten von IoT-Geräten durch einen neuen Domain-Registrar, wobei der Vorgänger-Domain-Registrar und die IoT-Geräte einer technischen Anlage in einem Geräteregister basierend auf Blockchain-Technologie hinterlegt sind, das Verfahren umfasst die folgenden Schritte:
- Bestimmen (d.h. definieren oder festlegen) der benötigten Anzahl von Nachbarschaftsnachweisen (Nearby-Attestations) durch den Vorgänger-Domain-Registrar;
- Eintragen des neuen Domain-Registrar in das Geräteregister;
- Einsammeln der Nachbarschaftsnachweise der jeweiligen IoT-Geräte durch den neuen Domain-Registrar, wobei ein Nachbarschaftsnachweis durch ein jeweiliges IoT-Gerät bereitgestellt wird;
- Prüfen, ob der neue Domain-Registrar die definierte (d.h. die benötigte bzw. festgelegte) Anzahl von Nachbarschaftsnachweisen (Nearby-Attestations) des Vorgänger-Domain-Registrar erfüllt;
- Übernahme der technischen Anlage durch den neuen Domain-Registrar als Authentifizierungs- und Konfigurationsinstanz von digitalen Zertifikaten für die IoT-Geräte der Anlage;
- Senden von Voucher-Requests durch die IoT-Geräte der Anlage an den neuen Domain-Registrar;
- Weiterleiten der Voucher-Requests durch den neuen Domain-Registrar an eine Autorisierungsstelle (MASA, Manufacturer Authorized Signing Authority, Hersteller-Autorisierungsstelle, vertrauenswürdiger Server);
- Überprüfen durch die Autorisierungsstelle (MASA) im Geräteregister (Blockchain), ob das jeweilige IoT-Gerät zum (anfragenden) neuen Domain-Registrar gehört;
- wobei, wenn die Autorisierungsstelle (MASA) feststellt, dass das entsprechende IoT-Gerät zum neuen Domain-Registrar gehört, die Autorisierungsstelle (MASA) einen Voucher für das entsprechende IoT-Gerät ausstellt und den Voucher an das entsprechende IoT-Gerät sendet.

Das Verfahren zum Recovery eines Domain-Registrar, bzw. zur Ersetzung eines alten Domain-Registrar durch einen neuen Domain-Registrar.

Eine erste vorteilhafte Ausgestaltung der Erfindung liegt darin, dass das entsprechende IoT-Gerät eine für ihn ausgestellte Geräteidentifizierung (z.B. IDevID, Initial Device Identifier) vom neuen Domain-Registrar akzeptiert, und wobei der neue Domain-Registrar die neue Geräteidentifizierung (z.B. LDevID, Local Significant Device Identifiers) auf das entsprechende IoT-Gerät schreibt (z.B. gemäss EST (Enrollment over Secure Transport), spezifiziert z.B. in RFC 7030). Dies ermöglicht u.a. eine sichere Geräteauthentifizierung und eine einfache Bereitstellung, sowie Verwaltung sicherer Geräte.

Eine weitere vorteilhafte Ausgestaltung der Erfindung liegt darin, dass das Prüfen, ob der neue Domain-Registrar die definierten Nachbarschaftsnachweise (Nearby-Attestations) des Vorgänger-Domain-Registrar erfüllt (insbesondere, ob die definierte Anzahl (bzw. die benötigte Anzahl) an Nachbarschaftsnachweisen erfüllt ist), durch einen intelligenten Vertrag (Smart Contract) des Geräteregisters (Blockchain) erfolgt. Das Erfülltsein von definierten Bedingungen wird durch den Smart Contract automatisch geprüft. Der Smart Contract ist ein in Blockchain-Technologie implementiertes Computerprotokoll, welches die Logik vertraglicher Regelungen technisch abbildet. Durch die Blockchain-Technologie werden Datensätze (Datenblöcke) durch kryptographische Verfahren miteinander verbunden.

Eine weitere vorteilhafte Ausgestaltung der Erfindung liegt darin, dass die jeweiligen Signaturen der Nachbarschaftsnachweise (Nearby-Attestations) mit den öffentlichen Schlüsseln (Public Keys) der jeweiligen IoT-Geräte verglichen werden, die im Geräteregister (Blockchain) noch mit dem Vorgänger-Domain-Registrar verknüpft sind. Dies erhöht die Datensicherheit.

Eine weitere vorteilhafte Ausgestaltung der Erfindung liegt darin, dass weiterhin geprüft wird, ob der neue Domain-Registrar das Secret (Private Key) besitzt, welches zum Registrar Public Key passt, der in den jeweiligen Nachbarschaftsnachweisen (Nearby-Attestations) steht. Auch dadurch wird die Datensicherheit erhöht.

Eine weitere vorteilhafte Ausgestaltung der Erfindung liegt darin, dass das Ausstellen eines Nachbarschaftsnachweises (Nearby-Attestation) basierend auf einer physischen Präsenz zum IoT-Gerätes erfolgt. Das Merkmal für physische Präsenz kann z.B. ein Kommunikationskanal auf dem Gerät sein, oder ein Taster am Gerät, der (mit Vorteil zu einer bestimmten Zeit) gedrückt werden muss.

Eine weitere vorteilhafte Ausgestaltung der Erfindung liegt darin, dass das Ausstellen eines Nachbarschaftsnachweises (Nearby-Attestation) basierend auf der Zugehörigkeit zum gleichen Computer Netzwerk (z.B. ein LAN-Netzwerk in einem Gebäude) des neuen Domain-Registrar und dem IoT-Gerät erfolgt. Auch dadurch wird die Datensicherheit erhöht.

Eine weitere vorteilhafte Ausgestaltung der Erfindung liegt in einer Anordnung zur Durchführung des erfinderischen Verfahrens zum Austauschen eines Vorgänger-Domain-Registrars für das Authentifizieren und Konfigurieren von digitalen Zertifikaten von IoT-Geräten. Eine solche Anordnung lässt sich mit entsprechend eingerichteten handelsüblichen Komponenten realisieren oder nachrüsten.

Eine weitere vorteilhafte Ausgestaltung der Erfindung liegt in einem Registrar, eingerichtet zur Durchführung des erfinderischen Verfahrens zum Austauschen eines Vorgänger-Domain-Registrars für das Authentifizieren und Konfigurieren von digitalen Zertifikaten von IoT-Geräten. Mit Vorteil ist eines der vorhandenen IoT-Geräte eingerichtet, um die Aufgaben des Registrars zu übernehmen und auszuführen.

Eine weitere vorteilhafte Ausgestaltung der Erfindung liegt darin, dass es sich beim Registrar um ein entsprechend eingerichtetes IoT-Gerät der Anlage (z.B. ein Gebäudeautomatisierungssystem für ein Gebäude oder eine Fabrik) handelt. Wenn ein schon vorhandenes IoT-Gerät als Registrar verwendet wird, ist es nicht notwendig ein zusätzliches Gerät bereitzustellen.

Die Erfindung sowie vorteilhafte Ausführungen der vorliegenden Erfindung werden am Beispiel der nachfolgenden Figur erläutert. Dabei zeigt:
- FIG 1: ein beispielhaftes Flussdiagramm für ein Verfahren zum Austauschen eines Vorgänger-Domain-Registrars für das Authentifizieren und Konfigurieren von digitalen Zertifikaten von IoT-Geräten durch einen neuen Domain-Registrar,
- FIG 2: ein erstes Diagramm für beispielhafte intelligente Verträge (smart contracts),
- FIG 3: ein zweites Diagramm für beispielhafte intelligente Verträge (smart contracts),
- FIG 4: eine beispielhafte Anordnung und ein Szenario für die Registrierung von fabrikneuen IoT-Geräten, und
- FIG 5: zeigt eine beispielhafte Anordnung und ein Szenario für einen Registraraustausch.

Die Sicherheit (Security) in einem Gebäudeautomationssystem ist ein zentraler Teil des Systems. Für die Sicherheit (Security) werden symmetrische und asymmetrische kryptographische Schlüssel verwendet damit sich Geräte (z.B. Feldgeräte, Sensoren, Aktoren) einer Anlage bzw. eines Gebäudes gegenseitig trauen und Informationen austauschen. Damit dieses Vertrauen hergestellt werden kann, wird normalerweise eine vertrauenswürdige Drittpartei verwendet, die neue Geräte einer Anlage hinzufügen kann, z.B. basierend auf dem in IETF (Internet Engineering Task Force, Internettechnik-Arbeitsgruppe) BRSKI (Bootstrapping Remote Secure Key Infrastructures) definierten Ablauf. Die vertrauenswürdige Drittpartei kann ein Registrar sein, der eine CA (Zertifizierungsstelle, Certificate Authority, certification authority) repräsentiert mit einem öffentlichen und einem privaten Schlüssel. Der private Schlüssel der Zertifizierungsstelle (CA) wird dazu verwendet die LDevID (Locally Significant Device Identifier, Lokal bedeutsame Gerätekennung; IEEE 802.1AE) zu signieren. Der Registrar ist berechtigt auf den Geräten sicherheitsrelevante Einstellungen zu verändern, wie z.B. die Konfiguration einer Vertrauensbeziehung zu einer Zertifizierungsstelle (CA). Der Registrar kann z.B. Teil eines Inbetriebnahme Tools sein, das die Anlage nach der Inbetriebnahme wieder verlässt. Alternativ kann der Registrar auch auf einem Gerät (z.B. entsprechend eingerichtetes Feldgerät) der Anlage sein bei dem die Geräte ihre LDevID X.509 Zertifikate beziehen oder erneuern. Der Lebenszyklus von einem Gebäudeautomationssystem ist normalerweise sehr lange und ist nicht selten grösser 15 Jahre. Während dieser Zeit kommt es vor, dass Geräte kaputt gehen und ersetzt werden müssen oder die Anlage wird erweitert und es kommen neue Geräte dazu. Damit das gemacht werden kann, müssen die neuen Geräte ihre LDevID wieder bei einem Registrar beziehen. Ein übliches Problem ist nun, dass das X.509 Zertifikat bzw. der entsprechende private Schlüssel vom Registrar verloren oder vergessen geht. Gründe dafür können sein, dass das Gerät mit dem Registrar defekt ist oder die verantwortliche Organisation oder Person nicht mehr existiert zu diesem Zeitpunkt (z.B. nach 5 Jahren). Das heisst, es kann kein neues Gerät in die Anlage integriert werden, z.B. wenn die Funktionalität auf der Anlage erweitert werden soll oder ein Gerät defekt ist und ausgetauscht werden muss.

Wenn der private Schlüssel vom Registrar nicht mehr verfügbar ist, dann muss ein neuer Registrar konfiguriert werden und sämtliche Geräte müssen in den Auslieferzustand bevor sie den neuen Registrar wieder akzeptieren. Das heisst, dass anschliessend auch die gesamte Applikation (z.B. Lichtsystem oder HLK System) nochmals in Betrieb genommen und getestet werden muss. Dies ist teuer und aufwändig.

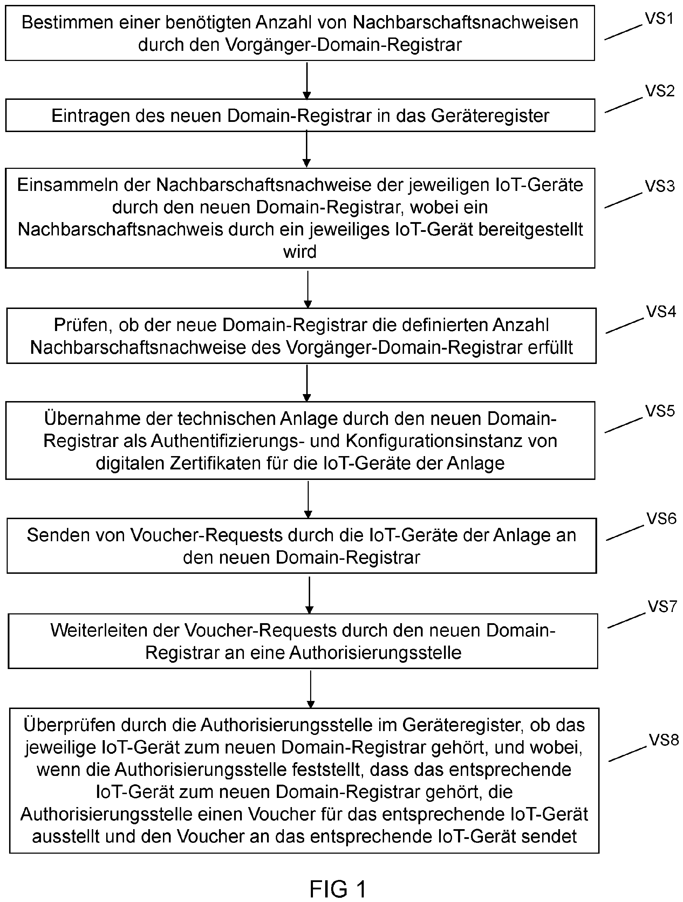

Figur 1 zeigt ein beispielhaftes Flussdiagramm für ein Verfahren zum Austauschen eines Vorgänger-Domain-Registrars für das Authentifizieren und Konfigurieren von digitalen Zertifikaten von IoT-Geräten durch einen neuen Domain-Registrar, wobei der Vorgänger-Domain-Registrar und die IoT-Geräte einer technischen Anlage in einem Geräteregister basierend auf Blockchain-Technologie hinterlegt sind, das Verfahren umfasst die folgenden Schritte:
(VS1) Bestimmen der benötigten Anzahl von Nachbarschaftsnachweisen durch den Vorgänger-Domain-Registrar;
(VS2) Eintragen des neuen Domain-Registrar in das Geräteregister;
(VS3) Einsammeln der Nachbarschaftsnachweise der jeweiligen IoT-Geräte durch den neuen Domain-Registrar, wobei ein Nachbarschaftsnachweis durch ein jeweiliges IoT-Gerät bereitgestellt wird;
(VS4) Prüfen, ob der neue Domain-Registrar die definierte Anzahl Nachbarschaftsnachweise des Vorgänger-Domain-Registrar erfüllt (d.h. die bestimmte benötigte Anzahl von Nachbarschaftsnachweisen des Vorgänger-Domain-Registrar erfüllt);
(VS5) Übernahme der technischen Anlage durch den neuen Domain-Registrar als Authentifizierungs- und Konfigurationsinstanz von digitalen Zertifikaten für die IoT-Geräte der Anlage;
(VS6) Senden von Voucher-Requests durch die IoT-Geräte der Anlage an den neuen Domain-Registrar;
(VS7) Weiterleiten der Voucher-Requests (Gutschein-Anfragen) durch den neuen Domain-Registrar an eine Autorisierungsstelle;
(VS8) Überprüfen durch die Autorisierungsstelle im Geräteregister, ob das jeweilige IoT-Gerät zum neuen Domain-Registrar gehört,
wobei, wenn die Autorisierungsstelle feststellt, dass das entsprechende IoT-Gerät zum neuen Domain-Registrar gehört, die Autorisierungsstelle einen Voucher für das entsprechende IoT-Gerät ausstellt und den Voucher an das entsprechende IoT-Gerät sendet. Das Verfahren kann mit handelsüblichen Software- und Hardwarekomponenten als computerimplementiertes Verfahren realisiert werden, mit entsprechend eingerichteten Datenverarbeitungseinrichtungen (Computer, Server, etc.) und entsprechenden Kommunikationsmechanismen (Internet, Intranet, Funkverbindungen, etc.).

Mit Vorteil akzeptiert das entsprechende IoT-Gerät eine für ihn ausgestellte Geräteidentifizierung vom neuen Domain-Registrar, und mit Vorteil schreibt der neue Domain-Registrar die neue Geräteidentifizierung auf das entsprechende IoT-Gerät.

Mit Vorteil erfolgt das Überprüfen, ob der neue Domain-Registrar die definierten Nachbarschaftsnachweise des Vorgänger-Domain-Registrar erfüllt, durch einen intelligenten Vertrag (smart contract) des Geräteregisters.

Mit Vorteil werden die jeweiligen Signaturen der Nachbarschaftsnachweise mit den öffentlichen Schlüsseln der jeweiligen IoT-Geräte verglichen, die im Geräteregister noch mit dem Vorgänger-Domain-Registrar verknüpft sind.

Mit Vorteil wird weiterhin überprüft, ob der neue Domain-Registrar das Secret (z.B. Credential, Berechtigungsnachweis) besitzt, welches zum Registrar Public Key passt, der in den jeweiligen Nachbarschaftsnachweisen steht.

Mit Vorteil erfolgt das Ausstellen eines Nachbarschaftsnachweises basierend auf einer physischen Präsenz zum IoT-Gerätes. Das Merkmal für physische Präsenz kann ein Kommunikationskanal auf dem Gerät sein. Ein möglicher Kommunikationskanal ist Funk, dessen Reichweite begrenzt ist, wie z.B. WPAN (Bluetooth, WiFi, 802.15.4 etc.) oder NFC. Alternativ kann es auch ein lokaler IP Adressraum sein, wie z.B. eine IPv6 Link-Lokal oder eine IPv6 Realm-local Adresse. Als weiteres Merkmal für physische Präsenz kann eine Taste verwendet werden, die zu einem bestimmten Zeitpunkt gedrückt werden muss.

Ein Nachbarschaftsnachweis (nearby attestation) hat z.B. folgenden Dateninhalt:
{ Eindeutige Geräte Identifikation (z.B. Seriennummer)
   Public Key vom Gerät
   Physische Präsenz Typ (z.B. BLE oder Absender IP-Adresse)
   Public Key Information vom Registrar
} Signatur des Nachbarschaftsnachweises (nearby attestation) mit dem Secret das zum Geräte Public Key (öffentlicher Schlüssel) aus dem Dateninhalt passt.

Mit Vorteil erfolgt das Ausstellen eines Nachbarschaftsnachweises basierend auf der Zugehörigkeit zum gleichen Computer Netzwerk des neuen Domain-Registrar und dem IoT-Gerät.

Bei der Inbetriebnahme werden die Geräte und der zugehörige Registrar in eine private oder öffentlich zugängliche und nachträglich nicht veränderbare Datenbank (nachfolgend nur Datenbank genannt) geschrieben. Eine mögliche Datenbank-Technologie könnte die Distributed Ledger Technology (DLT, Verteilte Ledger/Hauptbuch-Technologie) sein, die oft auch Blockchain genannt wird. Die Geräte bzw. deren Public-Key (öffentlicher Schlüssel) werden dem Registrar bzw. dessen Public-Key zugeordnet und diese Information wird ebenfalls in die Datenbank geschrieben. Die Einträge in die Datenbank werden von einem anlagespezifischen Registrar gemacht. Zusätzlich kann der Registrar ein anlagespezifisches Recovery Prozedere in die Datenbank schreiben für den Fall, wenn der Registrar nicht mehr verfügbar ist (z.B. Passwort oder Secret verloren). Das wird gemacht in Form eines Smart Contracts oder ebenfalls Chaincode (Kettencode) genannt. Wenn nun der Registrar (Registrierungsstelle) nicht mehr verfügbar ist, dann kann ein neuer Registrar die Geräte (IoT-Geräte) vom Vorgänger Registrar übernehmen gemäss dem definierten Recovery Prozedere im Smart Contract.

Das Recovery Prozedere ist dadurch gekennzeichnet, dass der neue Registrar eine definierte Anzahl von Nachbarschaftsnachweisen (nearby attestation) von Geräten präsentiert, die dem Vorgänger-Registrar in der Datenbank zugeordnet sind. Die «nearby attestation» wird vom Gerät mit dem Private-Key signiert, dessen Public-Key in der Datenbank mit dem Vorgänger-Registrar verknüpft ist. Die Nachbarschaftsnachweise werden vom jeweiligen Gerät nur ausgestellt, wenn der neue Registrar beweisen kann, dass er sich physisch in der Nähe des jeweiligen Gerätes aufhält. Das Merkmal für physische Präsenz kann anlagespezifisch definiert werden und wurde vom Vorgänger-Registrar zusammen mit dem Recovery Prozedere in die Datenbank geschrieben.

Das Merkmal für physische Präsenz kann ein Kommunikationskanal auf dem Gerät sein. Ein möglicher Kommunikationskanal ist Funk, dessen Reichweite begrenzt ist wie z.B. WPAN (Bluetooth, WiFi, 802.15.4 etc.) oder NFC. Alternativ kann es auch ein lokaler IP Adressraum sein wie z.B. eine IPv6 Link-Lokal oder eine IPv6 Realm-local Adresse. Als weiteres Merkmal für physische Präsenz kann eine Taste verwendet werden, die zu einem bestimmten Zeitpunkt gedrückt werden muss. Sobald die definierten Merkmale für die physische Präsenz erfüllt sind, stellt das Gerät einen Nachbarschaftsnachweis für den neuen Registrar aus.

Nachdem der neue Registrar die vordefinierte Anzahl von Nachbarschaftsnachweisen (nearby attestations) erhalten bzw. eingesammelt hat, kann er diese der Datenbank übergeben. Die Datenbank prüft nun mittels Recovery Prozedere im Smart Contract ob der neue Registrar berechtigt ist die Geräte vom Vorgänger-Registrar zu übernehmen. Dabei prüft der Smart Contract ob alle Nachbarschaftsnachweise bzw. die Geräte zum entsprechenden Vorgänger-Registrar gehören und ob die Anzahl der Nachbarschaftsnachweise gleich oder grösser ist als die vordefinierte Anzahl im Smart Contract (intelligenter Vertrag). Hierfür wird die Signatur der Nachbarschaftsnachweise (nearby attestations) geprüft mit dem entsprechenden Public Key (öffentlicher Schlüssel) vom Gerät, der in der Datenbank steht und zu diesem Zeitpunkt noch mit dem Vorgänger-Registrar verknüpft ist. Zusätzlich wird geprüft, ob der neue Registrar das Secret (Credential, Berechtigung) besitzt, welches zum Registrar Public Key passt, der im entsprechenden Nachbarschaftsnachweis steht.

Wenn alle Prüfungen erfolgreich waren, werden alle Geräte vom Vorgänger-Registrar zum neuen Registrar transferiert. Das heisst, alle Geräte sind ab diesem Zeitpunkt in der Datenbank nur noch dem neuen Registrar zugeordnet.

Sobald die Geräte in der Datenbank dem neuen Registrar zugeordnet sind, kann der normale Prozess gestartet werden um die LDevID (X.509 Zertifikat) auf die Geräte zu verteilen. Das heisst, der Registrar bekommt zuerst vom Gerät einen Voucher-Request (z.B. RFC8366), welcher der Registrar zu einem für das Gerät vertrauenswürdigen Server (MASA, Manufacturer Authorized Signing Authority) schickt. Dieser Server prüft die Datenbank ob das Gerät wirklich zum Registrar gehört, der den Voucher-Request geschickt hat. Ist diese Prüfung positiv, dann stellt der Server einen Voucher aus. Der Voucher bestätig dem Gerät (IoT-Gerät), dass es dem neuen Registrar vertrauen kann. Der Registrar leitet den Voucher anschliessend zum Gerät weiter. Ab jetzt vertraut das Gerät dem Registrar welcher im Voucher steht, falls alle Prüfungen positiv waren. Im nächsten Schritt akzeptiert das Gerät eine für ihn ausgestellte LDevID vom entsprechenden Registrar und der Registrar kann z.B. gem. EST (RFC7030; Enrollment over Secure Transport) die LDevID auf das Gerät schreiben

Das Einsammeln der Nachbarschaftsnachweis durch den Registrar kann durch den Registrar initiiert werden, z.B. durch eine Broadcast-meldung an die Geräte im Netzwerk, die darauf die entsprechenden Nachbarschaftsnachweise an den Registrar (bzw. den neuen Registrar) senden. Es kann aber auch sein, dass die Geräte im Netzwerk einen neuen Registrar selbständig erkennen (z.B. durch Funk-Ortung, ähnlich wie in einem WLAN-Netz oder bei Bluetooth ein anwesendes Gerät gemeldet wird) und ihre Nachbarschaftsnachweise an den Registrar automatisch senden.

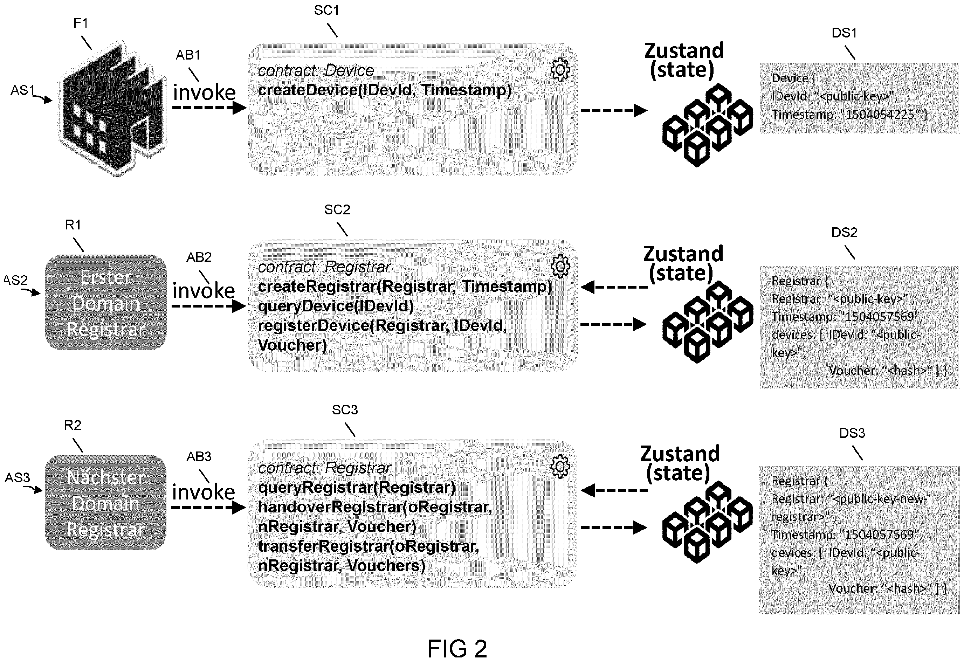

Figur 2 zeigt ein erstes Diagramm für beispielhafte intelligente Verträge SC1 - SC3 (smart contracts). Intelligente Verträge SC1 - SC3 (smart contracts) bilden eine Logik und Transaktionen vertraglicher Vereinbarungen technisch auf ein auf einem Computer oder Computernetzwerk ausführbares Protokoll ab. Zum Beispiel unterstützt die Blockchain-Technologie Ethereum Smart Contracts.

In der beispielhaften Darstellung gemäss Figur 2 zeigt der obere Abschnitt AS1 eine Fabrik F1, wobei durch den Aktivierungsbefehl AB1 der intelligente Vertrag SC1 für ein Gerät (contract: Device) aktiviert wird (invoke).

Der intelligente Vertrag SC1 ist in Pseudocode dargestellt:

```
          contract: Device
          createDevice(IDevId, Timestamp)
```

Am oberen rechten Rand von Figur 2 ist die Datenstruktur DS1 vom Gerät (Device) nach Ausführung des intelligenten Vertrages SC1 dargestellt (ebenfalls in einer Pseudocodenotation):

```
          Device {
          IDevId: "<public-key>",
          Timestamp: "1504054225" }
```

In der beispielhaften Darstellung gemäss Figur 2 zeigt der mittlere Abschnitt AS2 einen ersten Domain Registrar R1, wobei durch den Aktivierungsbefehl AB2 der intelligente Vertrag SC1 für den Registrar R1 (contract: Registrar) aktiviert wird (invoke) .

Der intelligente Vertrag SC2 ist in Pseudocode dargestellt:

```
          contract: Registrar
          createRegistrar(Registrar, Timestamp)
          queryDevice(IDevId)
          registerDevice(Registrar, IDevId, Voucher)
```

Am rechten Rand (mittig) von Figur 2 ist die Datenstruktur DS2 vom Registrar R1 nach Ausführung des intelligenten Vertrages SC2 dargestellt (ebenfalls in einer Pseudocodenotation):

```
          Registrar {
          Registrar: "<public-key>",
          Timestamp: "1504057569",
          devices: [ IDevId: "<public-key>",
                         Voucher: "<hash>" ] }.
```

In der beispielhaften Darstellung gemäss Figur 2 zeigt der untere Abschnitt AS3 einen nächsten Domain Registrar (Next Domain Registrar) R2, wobei durch den Aktivierungsbefehl AB3 der intelligente Vertrag SC3 für den Registrar R2 (contract: Registrar) aktiviert wird (invoke).

Der intelligente Vertrag SC3 ist in Pseudocode dargestellt:

```
          contract: Registrar
          queryRegistrar(Registrar)
          handoverRegistrar(oRegistrar, nRegistrar, Voucher)
          transferRegistrar(oRegistrar, nRegistrar, Vouchers).
```

Am rechten Rand (unten) von Figur 2 ist die Datenstruktur DS3 vom Registrar R2 nach Ausführung des intelligenten Vertrages SC3 dargestellt (ebenfalls in einer Pseudocodenotation):

```
          Registrar {
          Registrar: "<public-key-new-registrar>" ,
          Timestamp: "1504057569",
          devices: [ IDevId: "<public-key>",
                         Voucher: "<hash>" ] }.
```

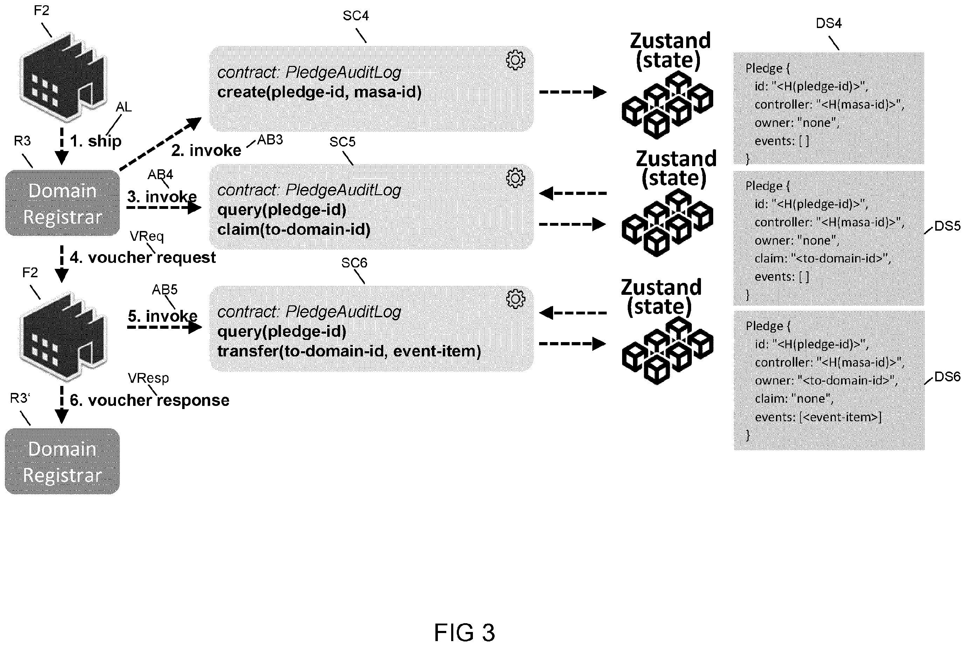

Figur 3 zeigt ein zweites Diagramm für beispielhafte intelligente Verträge (smart contracts) SC4 - SC6. Die intelligenten Verträge SC4 - SC6 sind jeweils in Pseudocode dargestellt.

Der intelligente Vertrag SC4 in Pseudocode:

```
          contract: PledgeAuditLog
          create(pledge-id, masa-id).
```

Der intelligente Vertrag SC5 in Pseudocode:

```
          contract: PledgeAuditLog
          query(pledge-id)
          claim(to-domain-id) .
```

Der intelligente Vertrag SC6 in Pseudocode:

```
          contract: PledgeAuditLog
          query(pledge-id)
          transfer(to-domain-id, event-item).
```

Der rechten Rand der beispielhaften Darstellung gemäss Figur 3 zeigt die jeweiligen Datenstrukturen DS4 bis DS6 für ein Gerät (auch Pledge genannt) nach Ausführung des jeweiligen Smart Contracts (intelligenten Vertrages) SC4 - SC6.

Datenstruktur DS4 vom Gerät (pledge) nach Ausführung des intelligenten Vertrages SC4 dargestellt (ebenfalls in einer Pseudocodenotation):

```
          Pledge {
               id: "<H (pledge-id) >",
               controller: "<H(masa-id)>",
               owner: "none",
               events: [ ]
          }.
```

Datenstruktur DS5 vom Gerät (pledge) nach Ausführung des intelligenten Vertrages SC5 dargestellt (ebenfalls in einer Pseudocodenotation):

```
           Pledge {
               id: "<H (pledge-id) >",
               controller: "<H(masa-id)>",
               owner: "none",
               claim: "<to-domain-id>",
               events: [ ]
          }.
```

Datenstruktur DS6 vom Gerät (pledge) nach Ausführung des intelligenten Vertrages SC6 dargestellt (ebenfalls in einer Pseudocodenotation):

```
          Pledge {
               id: "<H (pledge-id) >",
               controller: "<H(masa-id)>",
               owner: "<to-domain-id>",
               claim: "none",
               events: [<event-item>]
          }.
```

Der linke Rand der beispielhaften Darstellung gemäss Figur 3 zeigt ein beispielhaftes Ablaufszenario für die Registrierung (enrollment) eines fabrikneuen Gerätes als Registrar.

Vom Hersteller F2 (Fabrik, Manufacturer) erfolgt die Auslieferung AL (Schritt: 1.ship) des Registrar R3. Der Registrar R3 gibt einen Aktivierungsbefehl AB3 (Schritt: 2. invoke) an den intelligenten Vertrag SC4. Weiterhin gibt der Registrar R3 gibt einen Aktivierungsbefehl AB4 (Schritt: 3. invoke) an den intelligenten Vertrag SC5. Als nächsten Schritt VReq (Schritt: 4. voucher request) fordert der Registrar R3 vom Hersteller F2 einen Voucher (Beleg) an. Der Hersteller F2 gibt einen Aktivierungsbefehl AB5 (Schritt: 5. invoke) an den intelligenten Vertrag SC6. Im nächsten Schritt VResp (Schritt: 6. voucher response) liefert der Hersteller F2 den Voucher (Beleg, Zertifikat) an den Registrar R3'.

Nach Erhalt der Aktivierungsbefehle AB3 - AB5 werden die entsprechenden intelligenten Verträge SC4 - SC6 computerimplementiert ausgeführt und entsprechend in der Blockchain-Technologie implementierten Hauptbuch (Ledger) abgebildet.

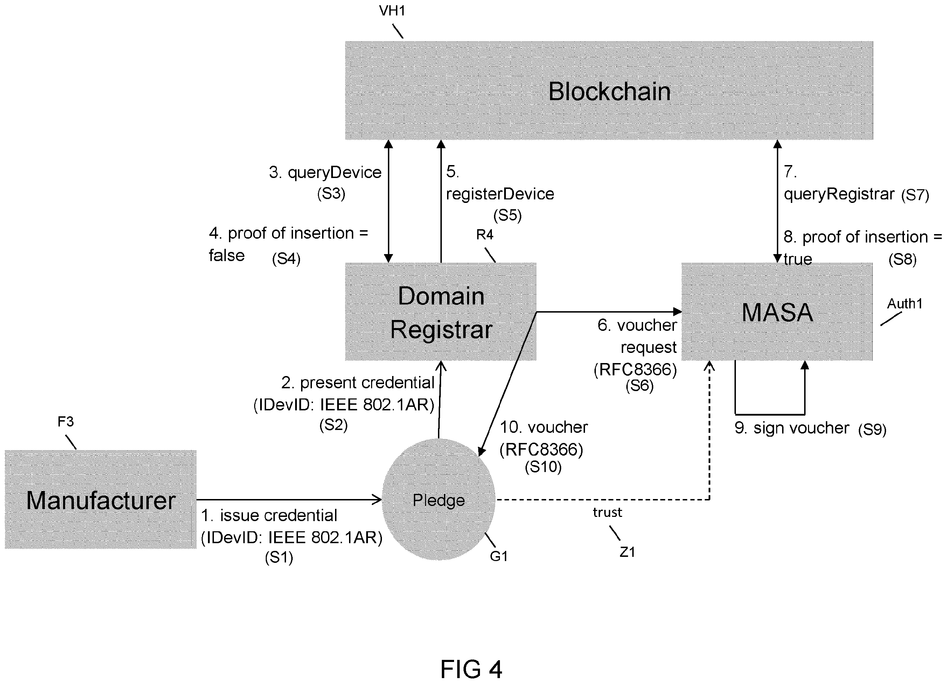

Figur 4 zeigt eine beispielhafte Anordnung und ein Szenario für die Registrierung von fabrikneuen IoT-Geräten (Factory New Device Enrollment). Die beispielhafte Anordnung gemäss Figur 4 zeigt einen Hersteller (Manufacturer) F3 für IoT-Geräte G1 (Pledge). Bei einem IoT-Gerät G1 kann es sich z.B. um Internetfähige Feldgeräte wie Sensoren (z.B. Temperatursensoren, Brandmelder) oder Aktoren (z.B. Stellglieder) handeln. Ein Domainregistrar R4 ist verantwortlich und zuständig für die Aufnahme eines IoT-Gerätes G1 in ein Netzwerk (z.B. LAN-Netzwerk oder IP-Netzwerk eines Gebäudes). Beim Domainregistrar R4 kann es sich um ein eigenständiges Gerät handeln. Die Funktion des Domainregistrar R4 kann aber auch durch ein IoT-Gerät G1 des Netzwerks übernommen werden. Dazu ist das Gerät G1 mit entsprechender Software und Hardware eingerichtet. Weiterhin weist die beispielhafte Anordnung gemäss Figur 4 ein verteiltes Hauptbuch (Blockchain, Distributed Ledger) VH1, sowie eine Autorisierungsstelle Auth1 (MASA, Manufacturer Authorized Signing Authority) auf. Bei der Autorisierungsstelle Auth1 kann es sich z.B. um einen vertrauenswürdigen Server (z.B. ein Zertifizierungsserver) handeln. Das verteilte Hauptbuch (Blockchain, Distributed Ledger) VH1 ist eingerichtet für die Durchführung von Transaktionen basierend auf Blockchaintechnologie. Eine Blockchain stellt technologisch gesehen eine verteilte Datenbank dar. Die Registrierung der Geräte G1 im Netzwerk basiert auf Blockchaintechnologie.

### Ablaufbeschreibung (Szenario mit Schritten S1 bis S9) für die Registrierung von fabrikneuen IoT-Geräten:

| | |
|---|---|
| 51 | Der Hersteller F3 stattet ein fabrikneues Gerät G1 (Pledge) mit einem "credential" (Berechtigungsnachweis) aus. |
| | [1. issue credential (IDevID: IEEE 802.1AR)] |
| S2 | Das Gerät G1 präsentiert den Berechtigungsnachweis (credential) beim Domain Registrar R4. |
| | [2. present credential (IDevID: IEEE 802.1AR)] |
| S3 | Der Registrar R4 prüft, ob das Gerät G1 in der verteilten Datenbank des Hauptbuches VH1 vorhanden |
| | ist, durch eine entsprechende Anfrage. |
| | [3. queryDevice] |
| S4 | Mitteilung des verteilten Hauptbuches VH1 an den Registrar R4, wenn das Gerät G1 keinen entsprechen den Eintrag in der Datenbank (Blockchain) des Hauptbuches hat. |
| | [4. proof of insertion = false] |
| S5 | Registrierung des Gerätes G1 in der Datenbank (Blockchain) durch den Registrar R4, wenn das Gerät G1 einen entsprechen Eintrag in der Datenbank des Hauptbuches VH1 hat. |
| | [5. registerDevice] |
| S6 | Anforderung eines Vouchers (Beleg, Zertifikat) für das Gerät G1 durch den Registrar R4 bei der Autorisierungsstelle Auth1 (MASA, Manufacturer Authorized Signing Authority) . |
| | [6. voucher request (RFC8366)] |
| S7 | Die Autorisierungsstelle Auth1 (MASA) prüft, ob der Registrar R4 in der verteilten Datenbank des Hauptbuches VH1 vorhanden ist, durch eine entsprechende Anfrage. |
| | [7. queryRegistrar] |
| S8 | Das verteilte Hauptbuches VH1 meldet der Autorisierungsstelle Auth1 (MASA), ob der Registrar R4 in der verteilten Datenbank des Hauptbuches VH1 vorhanden ist. |
| | [8. proof of insertion = true] |
| S9 | Wenn der Registrar R4 in der verteilten Datenbank des Hauptbuches VH1 vorhanden ist (8. proof of insertion = true), stellt die Autorisierungsstelle Auth1 (MASA) einen Voucher für das Gerär G1 aus. |
| | [9. sign voucher] |
| S10 | Die Autorisierungsstelle Auth1 (MASA) sendet über den Registrar R4 den Voucher für das Gerät G1 an das Gerät G1. |
| | [10. voucher (RFC8366)] |

In der Darstellung gemäss Figur 4 stellen die durchgezogenen Pfeile Anfragen bzw. Datenflüsse zwischen den entsprechenden Komponenten dar. Der gestrichelte Pfeil zwischen dem Gerät G1 (Pledge) und der Autorisierungsstelle Auth1 (MASA) stellt eine vertrauenswürdige Beziehung (trust bzw. vertrauenswürdiges Zertifikat) Z1 zwischen dem Gerät G1 und der Autorisierungsstelle Auth1 dar.

Ein Pledge ist ein Iot-Gerät, das einer Domäne beitreten möchte und nur einem bestimmten MASA vertraut.

Ein Voucher (RFC 8366) ist ein Artefakt, das von einem Pledge oder seinem Hersteller signiert wird und wird benötigt um den Pledge einem neuen "Besitzer" zuzuordnen. Es enthält bestimmte Informationen wie Pledge-Zertifikat, Domain-Id und Serien-Nummer des Gerätes.

Ein Domain Registrar repräsentiert ein Netzwerk und halt folgende Aufgaben als Admin:
- Pledge authentifizieren
- Voucher verteilen

Der MASA (Autorisierungsstelle) ist verantwortlich für die Verifizierung von eingehenden Vouchers, sowie das Signieren und Retournieren von Vouchers für einen Pledge.

Der Audit Log ist eine Datenstruktur, welche die Gerätegeschichten (auch "Events" genannt) enthält.

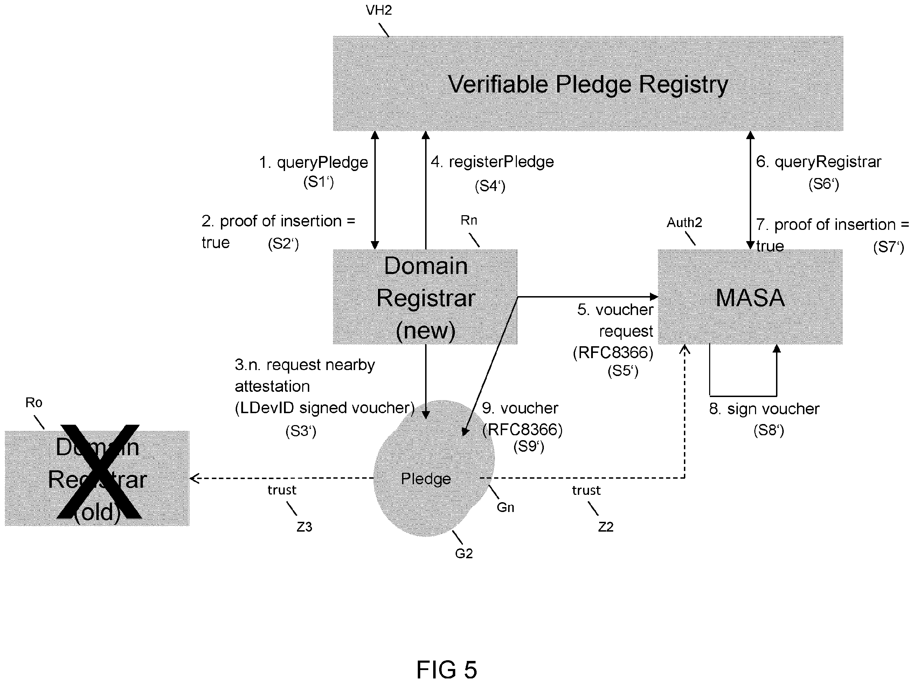

Figur 5 zeigt eine beispielhafte Anordnung und ein Szenario für einen Registraraustausch (Recovery Prozedere). Wenn ein Registrar nicht mehr verfügbar ist (z.B. Passwort oder Secret verloren), dann kann ein neuer Registrar die Geräte vom Vorgänger-Registrar übernehmen, mit Vorteil gemäss einem definierten Recovery Prozedere (Recovery-Vorgehen) definiert als Smart Contract (intelligenter Vertrag) oder in chain code (Kettencode).

Das Recovery Prozedere ist dadurch gekennzeichnet, dass der neue Registrar eine definierte Anzahl von Nachbarschaftsnachweisen (nearby attestation) von Geräten präsentiert, die dem Vorgänger-Registrar in der Datenbank VH2 (Blockchain) zugeordnet sind. Ein Nachbarschaftsnachweis wird vom Gerät mit dem Private-Key signiert, dessen Public-Key in der Datenbank VH2 (Blockchain) mit dem Vorgänger-Registrar verknüpft ist. Ein Nachbarschaftsnachweis wird vom Gerät nur ausgestellt, wenn der neue Registrar beweisen kann, dass er sich physisch in der Nähe aufhält. Das Merkmal für physische Präsenz kann anlagespezifisch definiert werden und wurde vom Vorgänger-Registrar zusammen mit dem Recovery Prozedere in die Datenbank VH2 (verteiltes Hauptbuch in Blockchaintechnologie) geschrieben.

Die beispielhafte Anordnung gemäss Figur 5 zeigt einen alten zu ersetzenden Domain Registrar Ro, den neuen Domain Registrar Rn, der den alten Domain Registrar Ro ersetzen soll. Weiterhin zeigt Figur 5 die IoT-Geräte (Pledge) G2 - Gn eines Netzwerks (z.B. IP-Netzwerk) für das ein Registrar zuständig ist. Bei einem IoT-Gerät G2 - Gn kann es sich z.B. um Internetfähige Feldgeräte wie Sensoren (z.B. Temperatursensoren, Brandmelder) oder Aktoren (z.B. Stellglieder) handeln. Ein Domainregistrar Ro, Rn ist verantwortlich und zuständig für die Aufnahme eines IoT-Gerätes G2 - Gn in ein Netzwerk (z.B. LAN-Netzwerk oder IP-Netzwerk eines Gebäudes). Weiterhin weist die beispielhafte Anordnung gemäss Figur 5 ein verteiltes Hauptbuch (Blockchain, Distributed Ledger) VH2, sowie eine Autorisierungsstelle Auth2 (MASA, Manufacturer Authorized Signing Authority) auf. Bei der Autorisierungsstelle Auth2 kann es sich z.B. um einen vertrauenswürdigen Server (z.B. ein Zertifizierungsserver) handeln. Das verteilte Hauptbuch (Blockchain, Distributed Ledger) VH2 ist eingerichtet für die Durchführung von Transaktionen basierend auf Blockchaintechnologie. Eine Blockchain stellt technologisch gesehen eine verteilte Datenbank dar. Die Registrierung der Geräte G2 bis Gn im Netzwerk basiert auf Blockchaintechnologie.

### Ablaufbeschreibung (Szenario mit Schritten S1' bis S9') für einen Registraraustausch:

| | |
|---|---|
| S1' | Der neue Registrar Rn trägt sich in die Datenbank VH2 ein. |
| | [1. queryPledge] |
| S2' | Der neue Registrar Rn prüft ob er wirklich in der Datenbank (verteiltes Hauptbuch) VH2 existiert. |
| | [2. proof of insertion = true] |
| S3' | Der neue Registrar Rn sammelt die Nachbarschaftsnachweise (nearby attestations) ein. |
| | [3.n. request nearby attestation (LDevID signed voucher)] |
| S4' | Der neue Registrar Rn übernimmt die Anlage. |
| | [4. registerPledge] |
| S5' | Der neue Registrar Rn bekommt den Voucher-Request |
| | vom Gerät G2 - Gn und schickt diesen zur Autorisierungsstelle Auth2 (MASA). |
| | [5. voucher request (RFC8366)] |
| S6' | Die Autorisierungsstelle Auth2 (MASA) prüft in der Datenbank (verteiltes Hauptbuch) VH2, ob das Gerät G2 - Gn zum anfragenden Registrar Rn gehört. |
| | [6. queryRegistrar] |
| S7' | Die Datenbank VH2 antwortet entsprechend. |
| | [7. proof of insertion = true] |
| S8' | Die Autorisierungsstelle Auth2 (MASA) stellt einen Voucher für das entsprechende Gerät G2 - Gn aus. |
| | [8. sign voucher] |
| S9' | Der Voucher wird an das Gerät G2 - Gn Zurückgeschickt. |
| | [9. voucher (RFC8366)] |

In der Darstellung gemäss Figur 5 stellen die durchgezogenen Pfeile Anfragen bzw. Datenflüsse zwischen den entsprechenden Komponenten dar. Die gestrichelten Pfeile stellen vertrauenswürdige Beziehungen (trust bzw. vertrauenswürdiges Zertifikat) Z2, Z3 dar.

Ein Vorteil der vorliegenden Erfindung ist u.a., dass wenn der private Schlüssel vom Registrar nicht mehr verfügbar ist alle Geräte automatisch mittels Nachbarschaftsnachweisen (nearby attestations) zu einem neuen Registrar transferiert werden können, ohne in den Auslieferzustand zu gehen.

Je nach Technologie muss die Datenbank nicht mehr zwingend vom Hersteller betrieben werden. Das heisst, dass auch die Kosten und die Verantwortung bzw. das Risiko nicht mehr beim Hersteller sind. Um einen Voucher-Request zu beantworten muss der Hersteller zwar noch Infrastruktur bereitstellen. Hier handelt es sich aber nur um eine Überprüfung der Datenbank bevor der Voucher für ein spezifisches Gerät ausgestellt wird. Diese Funktion ist sicherheitstechnisch in einer gesamtheitlichen Betrachtung weit weniger kritisch als z.B. die Datenbank.

Trotzdem kann sich ein Hersteller entscheiden Teil einer verteilten Datenbank zu sein und einen eigenen Knoten zu betreiben. Das kann in einem Konsortium sein oder auch nur Firmen intern. Das heisst, der Hersteller hat in jedem Fall ein aktuelles Abbild der Datenbank. Der Vorteil einer sicheren und nachträglich nicht veränderbaren Datenbank bleibt.

Die vorliegende Erfindung ermöglicht insbesondere eine effiziente sichere Aufnahme und Überprüfung (handelt es sich um ein schädliches oder korrumpiertes IoT-Gerät?) von IoT-Geräten in Netzwerke (z.B. ein Netzwerk für ein Gebäude mit im Netzwerk verbundenen Feldgeräten. Basierend auf BRSKI (Bootstrapping Remote Secure Key Infrastructure, IETF Standard) wird dieser Prozess automatisiert. Eine vertrauenswürdige Autorisierungsstelle (MASA, Manufacturer Authorized Signing Authority) stellt dabei die Historie eines bestimmten IoT-Gerätes einem Domain Registrar (z.B. Netzwerk-Admin) zur Verfügung, womit dieser ein Gerät Überprüfen kann.

Als verteilte Datenbank kann z.B. die Ethereum Blockchain Technologie verwendet werden.

Verfahren und Anordnung zum Austauschen eines Vorgänger-Domain-Registrars für das Authentifizieren und Konfigurieren von digitalen Zertifikaten von IoT-Geräten durch einen neuen Domain-Registrar, wobei der Vorgänger-Domain-Registrar und die IoT-Geräte einer technischen Anlage in einem Geräteregister basierend auf Blockchain-Technologie hinterlegt sind, wobei das Konfigurieren (bzw. das Festlegen oder Bestimmen oder Definieren) der benötigten Anzahl von Nachbarschaftsnachweisen (Nearby-Attestations) durch den Vorgänger-Domain-Registrar erfolgt; wobei der neue Domain-Registrar in das Geräteregister eingetragen wird; wobei ein Einsammeln der Nachbarschaftsnachweise der jeweiligen IoT-Geräte durch den neuen Domain-Registrar erfolgt, dabei wird ein Nachbarschaftsnachweis durch ein jeweiliges IoT-Gerät bereitgestellt; wobei eine Prüfung durchgeführt wird, ob der neue Domain-Registrar die definierte Anzahl von Nachbarschaftsnachweisen (Nearby-Attestations) des Vorgänger-Domain-Registrar erfüllt; wobei der neue Domain-Registrar als Authentifizierungs- und Konfigurationsinstanz von digitalen Zertifikaten für die IoT-Geräte der Anlage verwendet wird; wobei Voucher-Requests durch die IoT-Geräte der Anlage an den neuen Domain-Registrar gesendet werden; wobei ein Weiterleiten der Voucher-Requests durch den neuen Domain-Registrar an eine Autorisierungsstelle (MASA, Manufacturer Authorized Signing Authority, Hersteller-Autorisierungs-stelle, vertrauenswürdiger Server) erfolgt; wobei durch die Autorisierungsstelle (MASA) im Geräteregister (Blockchain) geprüft wird, ob das jeweilige IoT-Gerät zum (anfragenden) neuen Domain-Registrar gehört; wobei, wenn die Autorisierungsstelle (MASA) feststellt, dass das entsprechende IoT-Gerät zum neuen Domain-Registrar gehört, die Autorisierungsstelle (MASA) einen Voucher für das entsprechende IoT-Gerät ausstellt und den Voucher an das entsprechende IoT-Gerät sendet.

### Bezugszeichen

- VS1 - VS8: Verfahrensschritt
- F1- F3: Fabrik
- R1 - R3, R3', R4, Rn, Ro: Registrar
- AB1 - AB5: Aktivierungsbefehl
- SC1 - SC6: Intelligenter Vertrag
- DS1 - DS3: Datenstruktur
- AS1 - AS3: Abschnitt
- AL: Auslieferung
- VReq: Anforderung Voucher
- VResp: Auslieferung Voucher
- S1 - S10, S1' - S9': Schritt
- G1, G2, Gn: Gerät
- VH1, VH2: Verteiltes Hauptbuch
- Auth1, Auth2: Autorisierungsstelle
- Z1 - Z3: Zertifikat

## Patentansprüche

1. Verfahren zum Austauschen eines Vorgänger-Domain-Registrars (Ro) für das Authentifizieren und Konfigurieren von digitalen Zertifikaten von IoT-Geräten (G1 - Gn) durch einen neuen Domain-Registrar (Rn), wobei der Vorgänger-Domain-Registrar (Ro) und die IoT-Geräte (G1 - Gn) einer technischen Anlage in einem Geräteregister (VH1, VH2) basierend auf Blockchain-Technologie hinterlegt sind, das Verfahren umfasst die folgenden Schritte:
(VS1) Bestimmen einer benötigten Anzahl von Nachbarschaftsnachweisen durch den Vorgänger-Domain-Registrar (Ro);
(VS2) Eintragen des neuen Domain-Registrar (Rn) in das Geräteregister (VH1, VH2);
(VS3) Einsammeln der Nachbarschaftsnachweise der jeweiligen IoT-Geräte (G1 - Gn) durch den neuen Domain-Registrar (Rn), wobei ein Nachbarschaftsnachweis durch ein jeweiliges IoT-Gerät (G1 - Gn) bereitgestellt wird;
(VS4) Prüfen, ob der neue Domain-Registrar (Rn) die bestimmte Anzahl Nachbarschaftsnachweise des Vorgänger-Domain-Registrar (Ro) erfüllt;
(VS5) Übernahme der technischen Anlage durch den neuen Domain-Registrar (Rn) als Authentifizierungs- und Konfigurationsinstanz von digitalen Zertifikaten für die IoT-Geräte (G1 - Gn) der Anlage;
(VS6) Senden von Voucher-Requests durch die IoT-Geräte (G1 - Gn) der Anlage an den neuen Domain-Registrar (Rn);
(VS7) Weiterleiten der Voucher-Requests durch den neuen Domain-Registrar (Rn) an eine Autorisierungsstelle (Auth1, Auth2) ;
(VS8) Überprüfen durch die Autorisierungsstelle (Auth1, Auth2) im Geräteregister (VH1, VH2), ob das jeweilige IoT-Gerät (G1 - Gn) zum neuen Domain-Registrar (Rn) gehört,
wobei, wenn die Autorisierungsstelle (Auth1, Auth2) feststellt, dass das entsprechende IoT-Gerät (G1 - Gn) zum neuen Domain-Registrar (Rn) gehört, die Autorisierungsstelle (Auth1, Auth2) einen Voucher für das entsprechende IoT-Gerät (G1 - Gn) ausstellt und den Voucher an das entsprechende IoT-Gerät (G1 - Gn) sendet;
Austauschen des Vorgänger-Domain-Registrars (Ro) für das Authentifizieren und Konfigurieren von digitalen Zertifikaten von IoT-Geräten (G1 - Gn) durch den neuen Domain-Registrar (Rn) .

2. Verfahren nach Anspruch 1, wobei das entsprechende IoT-Gerät (G1 - Gn) eine für ihn ausgestellte Geräteidentifizierung vom neuen Domain-Registrar (Rn) akzeptiert, und wobei der neue Domain-Registrar die neue Geräteidentifizierung auf das entsprechende IoT-Gerät (G1 - Gn) schreibt.

3. Verfahren nach einem der vorstehenden Ansprüche, wobei das Prüfen, ob der neue Domain-Registrar (Rn) die definierten Nachbarschaftsnachweise des Vorgänger-Domain-Registrar (Ro) erfüllt, durch einen intelligenten Vertrag (SC1 - SC6) des Geräteregisters (VH1, VH2) erfolgt.

4. Verfahren nach Anspruch 3, wobei die jeweiligen Signaturen der Nachbarschaftsnachweise mit den öffentlichen Schlüsseln der jeweiligen IoT-Geräte (G1 - Gn) verglichen wird, die im Geräteregister (VH1, VH2) noch mit dem Vorgänger-Domain-Registrar (Ro) verknüpft sind.

5. Verfahren nach Anspruch 3 oder 4, wobei weiterhin geprüft wird, ob der neue Domain-Registrar (Rn) das Secret besitzt, welches zum Registrar Public Key passt, der in den jeweiligen Nachbarschaftsnachweisen steht.

6. Verfahren nach einem der vorstehenden Ansprüche, wobei das Ausstellen eines Nachbarschaftsnachweises basierend auf einer physischen Präsenz zum IoT-Gerätes (G1 - Gn) erfolgt.

7. Verfahren nach einem der vorstehenden Ansprüche, wobei das Ausstellen eines Nachbarschaftsnachweises basierend auf der Zugehörigkeit zum gleichen Computer Netzwerk des neuen Domain-Registrar (Rn) und dem IoT-Gerät (G1 - Gn) erfolgt.

8. Anordnung zur Durchführung eines Verfahrens nach einem der Ansprüche 1 bis 7.

9. Registrar (R1 - R3, R3', R4, Ro, Rn), eingerichtet zur Durchführung eines Verfahrens nach einem der Ansprüche 1 bis 7.

10. Registrar (R1 - R3, R3', R4, Ro, Rn) nach Anspruch 9, wobei es sich beim Registrar (R1 - R3, R3', R4, Ro, Rn) um ein entsprechend eingerichtetes IoT-Gerät (G1 - Gn) der Anlage handelt.

## Claims

1. Method for exchanging a predecessor domain registrar (Ro) for the authentication and configuration of digital certificates of IoT devices (G1 - Gn) with a new domain registrar (Rn), wherein the predecessor domain registrar (Ro) and the IoT devices (G1 - Gn) of a technical installation are stored in a device register (VH1, VH2) on the basis of blockchain technology, the method comprises the following steps:
(VS1) Determination by the predecessor domain registrar (Ro) of the number of nearby attestations needed;
(VS2) Entry of the new domain registrar (Rn) into the device register (VH1, VH2);
(VS3) Gathering of the nearby attestations of the respective IoT devices (G1 - Gn) by the new domain registrar (Rn), wherein a nearby attestation is provided by a respective IoT device (G1 - Gn);
(VS4) Checking of whether the new domain registrar (Rn) fulfils the defined number of nearby attestations of the predecessor domain registrar (Ro);
(VS5) Acceptance of the technical installation by the new domain registrar (Rn) as authentication and configuration entity of digital certificates for the IoT devices (G1 - Gn) of the installation;
(VS6) Sending of voucher requests by the IoT devices (G1 - Gn) of the installation to the new domain registrar (Rn);
(VS7) Forwarding of the voucher requests by the new domain registrar (Rn) to an authorisation authority (Auth1, Auth2);
(VS8) Checking by the authorisation authority (Auth1, Auth2) in the device register (VH1, VH2) of whether the respective IoT device (G1 - Gn) belongs to the new domain registrar (Rn),
wherein, if the authorisation authority (Auth1, Auth2) establishes that the corresponding IoT device (G1 - Gn) belongs to the new domain registrar (Rn), the authorisation authority (Auth1, Auth2) issues a voucher for the corresponding IoT device (G1 - Gn) and sends the voucher to the corresponding IoT device (G1 - Gn);
exchanging the predecessor domain registrar (Ro) for the authentication and configuration of digital certificates of IoT devices (G1 - Gn) with the new domain registrar (Rn).

2. Method according to claim 1, wherein the corresponding IoT device (G1 - Gn) accepts a device identification issued for it from the domain registrar (Rn), and wherein the new domain registrar writes the new device identification to the corresponding IoT device (G1 - Gn).

3. Method according to one of the preceding claims, wherein the check as to whether the new domain registrar (Rn) fulfils the defined nearby attestations of the predecessor domain registrar (Ro) takes place by a smart contract (SC1 - SC6) of the device register (VH1, VH2).

4. Method according to claim 3, wherein the respective signatures of the nearby attestations are compared with the public keys of the respective IoT devices (G1 - Gn) that are still linked to the predecessor domain registrar (Ro) in the device register (VH1, VH2).

5. Method according to claim 3 or 4, wherein a further check is made as to whether the new domain registrar (Rn) possesses the secret that matches the registrar public key, that is held in the respective nearby attestations.

6. Method according to one of the preceding claims, wherein the issuing of a nearby attestation takes place on the basis of a physical presence for the IoT devices (G1 - Gn).

7. Method according to one of the preceding claims, wherein the issuing of a nearby attestation takes place on the basis of belonging to the same computer network as the new domain registrar (Rn) and the IoT device (G1 - Gn).

8. Arrangement for carrying out a method according to one of claims 1 to 7.

9. Registrar (R1 - R3, R3', R4, Ro, Rn), configured for carrying out a method according to one of claims 1 to 7.

10. Registrar (R1 - R3, R3', R4, Ro, Rn) according to claim 9, wherein the registrar (R1 - R3, R3', R4, Ro, Rn) involves a correspondingly configured IoT device (G1 - Gn) of the installation.

## Revendications

1. Procédé de remplacement d'un registraire de domaine précédent (Ro) pour l'authentification et la configuration de certificats numériques de dispositifs IoT (G1 - Gn) par un nouveau registraire de domaine (Rn), le registraire de domaine précédent (Ro) et les dispositifs IoT (G1 - Gn) d'une installation technique étant déposés dans un registre d'appareils (VH1, VH2) basé sur la technologie blockchain, le procédé comprenant les étapes suivantes :
(VS1) déterminer un nombre requis de preuves de voisinage par le registraire de domaine précédent (Ro) ;
(VS2) inscrire le nouveau registraire de domaine (Rn) dans le registre d'appareils (VH1, VH2) ;
(VS3) collecter par le nouveau registraire de domaine (Rn) des preuves de voisinage des dispositifs IoT respectifs (G1 - Gn), une preuve de voisinage étant fournie par un dispositif IoT respectif (G1 - Gn) ;
(VS4) vérifier si le nouveau registraire de domaine (Rn) remplit le nombre déterminé de preuves de voisinage du registraire de domaine précédent (Ro) ;
(VS5) prendre en charge l'installation technique par le nouveau registraire de domaine (Rn) en tant qu'instance d'authentification et de configuration des certificats numériques pour les dispositifs IoT (G1 - Gn) de l'installation ;
(VS6) envoyer des requêtes de voucher par les dispositifs IoT (G1 - Gn) de l'installation au nouveau registraire de domaine (Rn) ;
(VS7) transmettre les requêtes de voucher par le nouveau registraire de domaine (Rn) à un organisme d'autorisation (Auth1, Auth2) ;
(VS8) vérifier par l'organisme d'autorisation (Auth1, Auth2) dans le registre d'appareils (VH1, VH2) si le dispositif IoT respectif (G1 - Gn) appartient au nouveau registraire de domaine (Rn),
dans lequel, lorsque l'organisme d'autorisation (Auth1, Auth2) détermine que le dispositif IoT correspondant (G1 - Gn) appartient au nouveau registraire de domaine (Rn), l'organisme d'autorisation (Auth1, Auth2) délivre un voucher pour le dispositif IoT correspondant (G1 - Gn) et envoie le voucher au dispositif IoT correspondant (G1 - Gn) ;
remplacer le registraire de domaine précédent (Ro) pour l'authentification et la configuration des certificats numériques des dispositifs IoT (G1 - Gn) par le nouveau registraire de domaine (Rn).

2. Procédé selon la revendication 1, dans lequel le dispositif IoT (G1 - Gn) correspondant accepte un identifiant de dispositif délivré pour lui par le nouveau registraire de domaine (Rn), et dans lequel le nouveau registraire de domaine inscrit le nouvel identifiant de dispositif sur le dispositif IoT (G1 - Gn) correspondant.

3. Procédé selon l'une quelconque des revendications précédentes, dans lequel la vérification du fait que le nouveau registraire de domaine (Rn) satisfait aux preuves de voisinage définies du registraire de domaine précédent (Ro) est effectuée par un contrat intelligent (SC1 - SC6) du registre de dispositifs (VH1, VH2).

4. Procédé selon la revendication 3, dans lequel les signatures respectives des preuves de voisinage sont comparées aux clés publiques des dispositifs IoT respectifs (G1 - Gn) qui sont encore associés au registraire de domaine précédent (Ro) dans le registre d'appareils (VH1, VH2).

5. Procédé selon la revendication 3 ou 4, dans lequel est poursuivie la vérification du fait que le nouveau registraire de domaine (Rn) possède le secret qui correspond à la clé publique de registraire qui se trouve dans les preuves de voisinage respectives.

6. Procédé selon l'une des revendications précédentes, dans lequel l'établissement d'une preuve de voisinage est effectué sur la base d'une présence physique au niveau du dispositif IoT (G1 - Gn).

7. Procédé selon l'une des revendications précédentes, dans lequel l'émission d'une preuve de voisinage est effectuée sur la base de l'appartenance au même réseau informatique du nouveau registraire de domaine (Rn) et du dispositif IoT (G1 - Gn).

8. Dispositif pour la mise en oeuvre d'un procédé selon l'une des revendications 1 à 7.

9. Registraire (R1 - R3, R3', R4, Ro, Rn), configuré pour mettre en oeuvre un procédé selon l'une des revendications 1 à 7.

10. Registraire (R1 - R3, R3', R4, Ro, Rn) selon la revendication 9, dans lequel le registraire (R1 - R3, R3', R4, Ro, Rn), est un dispositif IoT (G1 - Gn) de l'installation configuré en conséquence.
